(19) Europäisches Patentamt

European Patent Office

Office européen des brevets

(11) **EP 0 625 380 B1**

(12) **EUROPÄISCHE PATENTSCHRIFT**

(45) Veröffentlichungstag und Bekanntmachung des Hinweises auf die Patenterteilung:
**08.09.1999 Patentblatt 1999/36**

(51) Int. Cl.$^6$: **B07C 5/36**

(21) Anmeldenummer: 93108050.1

(22) Anmeldetag: **18.05.1993**

(54) **Separierverfahren**

Method for separating

Procédé de séparation

(84) Benannte Vertragsstaaten:
**AT BE CH DE ES FR GB IT LI LU NL**

(43) Veröffentlichungstag der Anmeldung:
**23.11.1994 Patentblatt 1994/47**

(73) Patentinhaber:
**SIEMENS AKTIENGESELLSCHAFT**
**80333 München (DE)**

(72) Erfinder:
 • **Appelt, Hans-Peter, Dipl.-Ing.**
   **W-5210 Troisdorf (DE)**
 • **Franke, Kurt, Dipl.-Ing.**
   **W-5000 Köln (DE)**
 • **Kirsten, Johannes, Dipl.-Ing.**
   **W-5042 Erftstadt (DE)**

(56) Entgegenhaltungen:
EP-A- 0 103 421          FR-A- 2 666 316
US-A- 5 018 073

**Beschreibung**

Die vorliegende Erfindung betrifft ein Separierverfahren zum Separieren fehlerhafter von fehlerfreien Glasscheiben aus einer Folge von Glasscheiben in einer Separieranlage mit einer Separiervorrichtung, wobei die Glasscheiben der Separiervorrichtung mit einer Transportgeschwindigkeit zugeführt werden und wobei zum einwandfreien Separieren einer bestimmten fehlerhaften Glasscheibe aus der Folge von Glasscheiben vor der Separiervorrichtung ein Mindestabstand der bestimmten fehlerhaften Glasscheibe zur vorhergehenden und/oder nachfolgenden Glasscheibe erforderlich ist.

Ein derartiges Verfahren wird beispielsweise in der Glasindustrie bei Floatglasanlagen verwendet. Bei dem bekannten Verfahren wird eine endlose Scheibe erzeugt, die vor der Separieranlage in einzelne Scheiben aufgeteilt wird. Die Scheiben werden der Separieranlage mit einer Eingangsgeschwindigkeit zugeführt und dort auf eine Transportgeschwindigkeit beschleunigt. Der Abstand d einer Scheibe zur vorhergehenden Scheibe ergibt sich dabei zu

$$d = l \cdot \frac{v_2 - v_1}{v_1} \qquad (1)$$

mit

I = Scheibenlange,
$v_1$ = Eingangsgeschwindigkeit

und

$v_2$ = Transportgeschwindigkeit.

Aufgrund der Konstruktion der Separieranlage ist jedoch zwischen zwei Scheiben stets ein minimaler Abstand $d_{min}$ einzuhalten. Fehlerfreie Scheiben unter-schreiten in aller Regel nicht die minimale Scheiben-lange $l_{min}$, die zum Erreichen des minimalen Abstand $d_{min}$ nötig ist. Wenn dagegen in der erzeugten Endlosscheibe ein Fehler auftritt, muß dieser Fehler selbstverständlich aus der Folge von Teilen separiert werden. Im Stand der Technik mußte stets ein Stuck mit der Min-destlänge $l_{min}$ ausgeschnitten werden, um den Mindest-abstand $d_{min}$ zur vorhergehenden fehlerfreien Scheibe zu gewahrleisten. Dies führte in vielen Fallen zu einem unnötig hohen Ausschuß.

Auch aus anderen Bereichen der Sortier- und Lagertechnik, so z.B. bei der Postgutbehandlung und der Sortierung von Versandboxen sind Separierverfahren bekannt (FR-A-2 666 316 und US-A-5 018 073). Diese Separierverfahren arbeiten jedoch mit einem För-derbandtransportsystem, das bereits vorhandene För-dergutabstände unverändert läßt, sind also nicht vergleichbar.

Die Aufgabe der vorliegenden Erfindung besteht folglich darin, ein Separierverfahren anzugeben, mittels dessen die Separierung fehlerhafter Scheiben verbessert werden kann, insbesondere fehlerhafte Scheiben trotz ihrer geringen Größe leichter von fehlerfreien Scheiben aus einer Folge von Scheiben separiert werden können.

Die Aufgabe wird dadurch gelöst, daß zur Abstandsoptimierung für eine störungsfreie Separierung der bestimmten fehlerhaften Glasscheibe diese vor der Separiervorrichtung mit einem für die bestimmte fehlerhafte Glasscheibe spezifischen Geschwindigkeitsprofil transportiert wird, wobei die bestimmte fehlerhafte Glasscheibe mit einer Korrekturgeschwindigkeit transportiert wird, wenn der ursprüngliche Abstand der bestimmten fehlerhaften Glasscheibe zur vorhergehenden Glasscheibe bei gegenüber der vorhergehenden Glasscheibe unveränderter Geschwindigkeit kleiner als der Mindestabstand wäre, wobei die Korrekturgeschwindigkeit kleiner oder gleich der Transportgeschwindigkeit, multipliziert mit dem durch eine Brechwalze vorgegebenen Abstand und dividiert durch den Mindestabstand ist.

Wenn die fehlerhafte Scheibe mit einer Korrekturgeschwindigkeit transportiert wird, wenn der ursprüngliche Abstand der fehlerhaften Scheibe zur vorhergehenden Scheibe bei gegenüber der vorhergehenden Scheibe unverändertem Geschwindigkeitsprofil kleiner als der Mindestabstand ist, wird nur dann in den Normalbetrieb der Separieranlage eingegriffen, wenn dies zur Abstandserhöhung unbedingt nötig ist. Die Korrekturgeschwindigkeit ist dabei kleiner oder gleich der Transportgeschwindigkeit, multipliziert mit dem ursprünglichen Abstand und dividiert durch den minimalen Abstand. Die Korrekturgeschwindigkeit ist mit V3 bezeichnet. Ihre Größe ergibt sich aus der in der Beschreibung naher ausgeführten mathematischen Formel (3).

Weitere Vorteile und Einzelheiten ergeben sich aus der nachfolgenden Beschreibung eines Ausführungsbeispiels, anhand der Zeichnungen und in Verbindung mit den Unteransprüchen. Dabei zeigen:

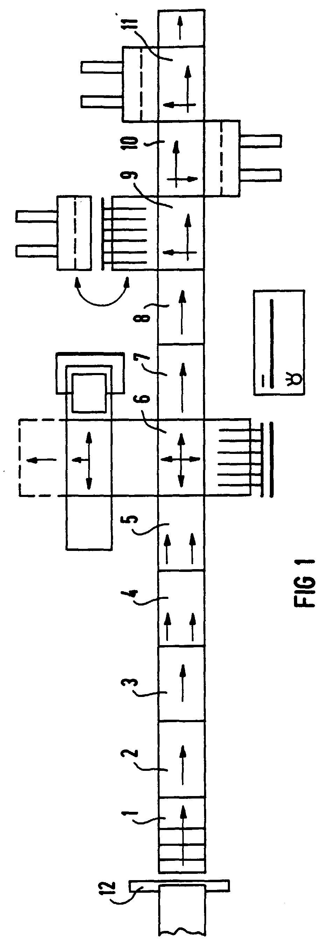

FIG 1 eine Separieranlage von oben und

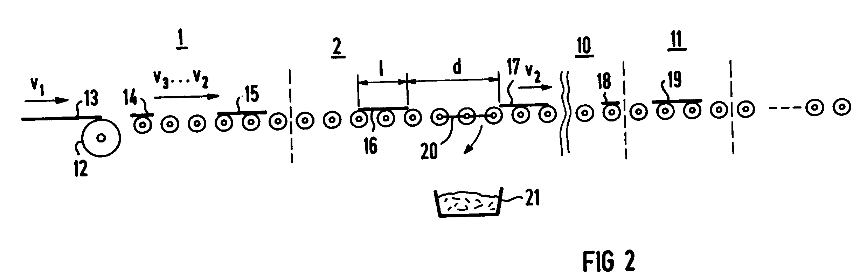

FIG 2 eine Separieranlage von der Seite.

Die Separieranlage ist als Glassortieranlage ausgebildet. Gemaß den Figuren besteht die Separieranlage aus mehreren Rollenfeldern 1 bis 11. Den Rollenfeldern 1 bis 11 ist je ein Antrieb zugeordnet, der unabhängig von den Antrieben der anderen Rollenfelder ansteuerbar ist. Die Regelung der Antriebe erfolgt dabei für die einzelnen Antriebe über Softwareregler, die in einer speicherprogrammierbaren Steuerung angeordnet sind.

Um die Flexibilität der Regelung zu erhöhen, kann jedes Rollenfeld, z.B. das Rollenfeld 1, auch in mehrere Segmente aufgeteilt sein. In diesem Fall ist jedem Segment ein eigener Antrieb zugeordnet, der unabhängig von den Antrieben der anderen Segmente dieses Rollenfelds ansteuerbar ist. Im Extremfall kann sogar jeder einzelnen Rolle ein eigener, unabhängig regelbarer Antrieb zugeordnet sein. In diesem Fall ist eine extrem flexible Regelung möglich, bei der sogar einzelne Rollen mit unterschiedlichen Geschwindigkeiten betrieben werden. Die Separieranlage ist in diesem Fall mit nur geringfügig erhöhtem Aufwand optimal betreibbar.

Als besonderer Vorteil ist anzusehen, daß die Softwareregler auch bei bestehenden Anlagen nachrüstbar sind. Die Regler können dabei nach Bedarf parametriert werden, z. B. bezuglich ihres Hochlauf- bzw. Abfahrverhaltens.

Vor dem Rollenfeld 1 ist eine Brechwalze 12 angeordnet, über die der Separieranlage eine Endlos-Glasscheibe 13 mit der Eingangsgeschwindigkeit $v_1$ zugeführt wird. Die Endlos-Glasscheibe 13 wird durch die Brechwalze 12 in an sich bekannter Weise gebrochen. Dabei entstehen einzelne Scheiben 14 bis 19.

Die Scheiben 14 bis 19 werden im Rollenfeld 1, das als Beschleunigungsrollenfeld dient, auf die Transportgeschwindigkeit $v_2$ gebracht. Zwischen den einzelnen Glasscheiben 14-19 stellt sich dadurch ein Abstand d gemäß Formel 1 ein. Da die Transportgeschwindigkeit $v_2$ in der Separieranlage konstant ist, ändert sich auch der Abstand d zwischen zwei Glasscheiben nicht mehr.

Nahe dem Rollenfeld 1, im optimalen Fall im Rollenfeld 3, befindet sich eine Wippe 20, die im vorliegenden Fall als Separiervorrichtung dient. Wenn eine fehlerhafte Scheibe über das Rollenfeld 1 zur Wippe 20 transportiert wird, wird die Wippe 20 geöffnet. Dadurch fällt die fehlerhafte Scheibe, beispielsweise die Scheibe 14, in den Scherbenkasten 21. Danach wird die Wippe 20 wieder geschlossen.

Das Öffnen und das Schließen der Wippe 20 erfordern eine gewisse Zeit. Um Beschädigungen der vorhergehenden Scheibe zu vermeiden, darf die Wippe 20 vor einer Fehlerscheibe daher erst dann geöffnet werden, wenn die vorhergehende Scheibe den Klappenbereich vollständig verlassen hat. Ebenso muß die Wippe 20 wieder vollständig geschlossen sein, bevor die nachfolgende Scheibe den Klappenbereich erreicht. Durch diese Anforderung ist der Mindestabstand $d_{min}$ zwischen zwei aufeinanderfolgenden Scheiben bestimmt.

Wie obenstehend erläutert, ist der Abstand einer bestimmten Scheibe zur vorhergehenden Scheibe durch die Länge I der Scheibe, die Eingangsgeschwindigkeit $v_1$ und die Transportgeschwindigkeit $v_2$ festgelegt, wenn keine zusätzlichen Maßnahmen ergriffen werden. Die Mindestlänge $I_{min}$ müßte daher in diesem Fall die Bedingung

$$I_{min} = d_{min} \frac{v_1}{v_2 - v_1} \qquad (2)$$

erfüllen. In vielen Fällen treten in der Endlos-Glasscheibe 13 aber nur sehr kleine Fehler auf. Um bei der Separierung der Fehlerscheibe Beschädigungen der vorhergehenden Scheibe zu vermeiden, muß daher eine größere Fehlerscheibe produziert werden als aufgrund des Fehlers selbst nötig wäre. Dies führt zu einem erhöhten Ausschuß und damit einem verringerten Ausnutzungsgrad.

Um nun die Ausnutzung der Glasscheibe 13 erhöhen zu können, wird wie folgt verfahren:

Wenn eine Scheibe, deren Länge I kleiner als die oben definierte Minimallänge $I_{min}$ ist, von der Brechwalze 12 auf das Beschleunigungsrollenfeld 1 gelangt, so wird die Scheibe, beispielsweise die Scheibe 14, nachdem die vorhergehende Scheibe, z. B. die Scheibe 15, das Rollenfeld 1 verlassen hat, nicht auf die Transportgeschwindigkeit $v_2$ beschleunigt, sondern nur auf die Korrekturgeschwindigkeit $v_3$. Die Korrekturgeschwindigkeit $v_3$ ist kleiner als die Transportgeschwindigkeit $v_2$. Sie errechnet sich zu

$$v_3 = \frac{I}{d_{min}} \cdot \frac{v_2 - v_1}{v_1} \cdot v_2 \qquad (3)$$

Dadurch vergrößert sich der Abstand d von der Fehlerscheibe zur der vorhergehenden Scheibe auf den Mindestabstand $d_{min}$. Erst am Ende des Beschleunigungsrollenfeldes 1 wird die Fehlerscheibe auf die Transportgeschwindigkeit $v_2$ beschleunigt. Im gleichen Ausmaß, in dem der Abstand d zur vorhergehenden Scheibe vergrößert wird, verringert sich der Abstand d zur nachfolgenden Scheibe. Dies ist jedoch aus folgendem Grund unkritisch:

Wenn die nachfolgende Scheibe ebenfalls eine Fehlerscheibe ist, kann die Wippe 20 geöffnet bleiben. In diesem Fall ist der Abstand d zwischen den beiden aufeinanderfolgenden Fehlerscheiben unbeachtlich. Wenn die nachfolgende Scheibe dagegen eine fehlerfreie Scheibe ist, so ist ihre Länge I in der Regel erheblich größer als die Mindestlänge $I_{min}$, so daß der Abstand d der fehlerfreien Scheibe zur vorhergehenden Fehlerscheibe trotz Verringerung immer noch größer als der Mindestabstand $d_{min}$ ist. Die Korrekturgeschwindigkeit $v_3$ kann daher auch kleiner als die gemaß Formel 3 berechnete Geschwindigkeit sein. Um in Ausnahmefällen auch gute Scheiben geringer Länge I behandeln zu können, ist das Prinzip des scheibenspezifischen Geschwindigkeitsprofils selbstverständlich auch in anderen Rollenfeldern 2 bis 11 anwendbar.

In Einzelfällen kann es auch sinnvoll sein, eine bestimmte Scheibe mit einer höheren Geschwindigkeit als der Transportgeschwindigkeit $v_2$ zu transportieren. Ein derartiger Fall liegt beispielsweise vor, wenn der Abstand d einer bestimmten Scheibe zur nachfolgenden Scheibe vergrößert werden soll und der Abstand d der bestimmten Scheibe zur vorhergehenden Scheibe groß ist.

Wenn das Rollenfeld 1 aus mehreren Segmenten besteht, die getrennt ansteuerbar sind, kann die Abstandserhöhung selbstverständlich auch dann erfolgen, wenn sich die vorhergehende Scheibe zwar im Rollenfeld 1, aber in einem anderen Segment als die bestimmte Scheibe befindet.

Aus dem obenstehenden ist ersichtlich, daß mit dem erfindungsgemäßen Verfahren unter Beibehaltung derselben mechanischen Anlagenbedingungen die minimale Fehlerscheibenlänge um das Verhältnis $v_2/v_3$ verkleinert werden kann, wenn eine entsprechende Geschwindigkeitsregelung auf dem Beschleunigungsrollenfeld 1 erfolgt.

Bei obenstehendem Verfahren erfolgt die Beschleunigung in üblicher Weise über softwaremäßig vorgegebene Parameter im Rollenfeld 1 und die Separierung dahinter, vorzugsweise unmittelbar dahinter, z. B. im Rollenfeld 3. Bei Anordnung der Wippe 20 im Rollenfeld 3 können nämlich so kleine Fehlerscheiben geschnitten werden, daß ihre Länge I gleich der transporttechnisch kleinstmöglichen Länge ist, nämlich gleich dem Abstand einer Rolle zu übernächsten Rolle.

Die obenstehend beschriebene Separieranlage wird über eine übliche speicherprogrammierbare Steuerung, z. B. eine SIMATIC S5-155 U von Siemens, gesteuert. Zeitkritische Teilprozesse der Separieranlage werden dabei von einer modular aufgebauten intelligenten Untereinheit der speicherprogrammierbaren Steuerung, z.B. eine IP 252 M von Siemens, gesteuert und überwacht. Der Aufbau einer derartigen intelligenten Untereinheit ist beispielsweise in der beigefügten älteren deutschen Patentanmeldung P 42 41 328.9 beschrieben.

**Patentansprüche**

1. Separierverfahren zum Separieren fehlerhafter von fehlerfreien Glasscheiben aus einer Folge von Glasscheiben (14-19) in einer Separieranlage mit einer Separiervorrichtung (20), wobei die Glasscheiben (14-19) der Separiervorrichtung (20) mit einer Transportgeschwindigkeit ($v_2$) zugeführt werden und wobei zum einwandfreien Separieren einer bestimmten fehlerhaften Glasscheibe aus der Folge von Glasscheiben (14-19) vor der Separiervorrichtung (20) ein Mindestabstand ($d_{min}$) der bestimmten fehlerhaften Glasscheibe zur vorhergehenden und/oder nachfolgenden Glasscheibe erforderlich ist, **dadurch gekennzeichnet,** daß zur Abstandsoptimierung für eine störungsfreie Separierung der bestimmten fehlerhaften Glasscheibe (14) diese vor der Separiervorrichtung (20) mit einem für die bestimmte fehlerhafte Glasscheibe (14) spezifischen Geschwindigkeitsprofil (V1,V2,V3) transportiert wird, wobei die bestimmte fehlerhafte Glasscheibe (14) mit einer Korrekturgeschwindigkeit ($v_3$) transportiert wird, wenn der ursprüngliche Abstand (d) der bestimmten fehlerhaften Glasscheibe (14) zur vorhergehenden Glasscheibe (15) bei gegenüber der vorhergehenden Glasscheibe (15) unveränderter Geschwindigkeit kleiner als der Mindestabstand ($d_{min}$) wäre, wobei die Korrekturgeschwindigkeit ($v_3$) kleiner oder gleich der Transportgeschwindigkeit ($v_2$), multipliziert mit dem durch eine Brechwalze (12) vorgegebenen Abstand (d) und dividiert durch den Mindestabstand ($d_{min}$) ist.

2. Separierverfahren nach Anspruch 1, **dadurch gekennzeichnet,**

   - daß die Glasscheiben (14-19) der Separieranlage mit einer Eingangsgeschwindigkeit ($v_1$) zugeführt werden wobei
   - der durch die Brechwalze vorgegebene Abstand (d) von der Eingangs- ($v_1$) und der Transportgeschwindigkeit ($v_2$) abhängt.

3. Separieranlage für Glasscheiben zur Durchführung des Verfahrens nach einem der Ansprüche 1 oder 2 mit einer Separiervorrichtung (20), wobei der Separiervorrichtung (20) über Rollenfelder (1-11) eine Folge von voneinander zu separierenden Glasscheiben (14-19) zufuhrbar ist, **dadurch gekennzeichnet,** daß vor der Separiervorrichtung (20) mindestens zwei unabhängig voneinander ansteuerbare Rollenfelder (1,2) bzw. mindestens zwei unabhängig voneinander ansteuerbare Segmente eines Rollenfeldes (z.B. 1) angeordnet sind.

4. Separieranlage nach Anspruch 3, **dadurch gekennzeichnet,** daß den Rollen eines Segments bzw. eines Rollenfeldes mindestens ein unabhängig von anderen Antrieben ansteuerbarer Antrieb zugeordnet ist und daß der Antrieb softwareregelbar ist.

5. Separieranlage nach Anspruch 3 oder 4, **dadurch gekennzeichnet**, daß zur Steuerung der Separieranlage eine speicherprogrammierbare Steuerung mit mindestens einer modular aufgebauten intelligenten Untereinheit verwendet wird, wobei die Untereinheit zur Steuerung und Überwachung zeitkritischer Prozesse eingesetzt wird.

**Claims**

1. Method for separating defective glass sheets from non-defective ones out of a succession of glass sheets (14 - 19) in a separating unit with a separating device (20), wherein the glass sheets (14 - 19) are fed to the separating device (20) at a convey-

ance speed ($v_2$) and wherein for the satisfactory separation of a particular defective glass sheet from the succession of glass sheets (14 - 19) a minimum distance ($d_{min}$) of the particular defective glass sheet from the preceding and/or following glass sheet is required in front of the separating device (20), **characterised in that** in order to optimize the distance for a trouble-free separation of the particular defective glass sheet (14) the latter is conveyed in front of the separating unit (20) with a speed profile (V1, V2, V3) specific to the particular defective glass sheet (14), wherein the particular defective glass sheet (14) is conveyed at a corrective speed ($v_3$) if the original distance (d) of the particular defective glass sheet (14) from the preceding glass sheet (15) is smaller than the minimum distance ($d_{min}$) with unchanged speed compared with the preceding glass sheet (15), wherein the corrective speed ($v_3$) is slower than or equal to the conveyance speed ($v_2$), multiplied by the distance (d) set by a spiked roller (12) and divided by the minimum distance ($d_{min}$).

2. Method for separating according to claim 1, **characterised in that**

- the glass sheets (14 - 19) are fed to the separating unit at an initial speed ($v_1$), wherein
- the distance (d) set by the spiked roller depends on the initial speed ($v_1$) and the conveyance speed ($v_2$).

3. Separating unit for glass sheets for carrying out the method according to one of claims 1 or 2 with a separating device (20), wherein there is feedable to the separating device (20) via roller bays (1 - 11) a succession of glass sheets (14 - 19) to be separated from one another, **characterised in that** in front of the separating device (20) are disposed at least two roller bays (1, 2) activatable independently of one another or at least two segments of a roller bay (e.g. 1) activatable independently of one another.

4. Separating unit according to claim 3, **characterised in that** there is assigned to the rollers of a segment or of a roller bay at least one drive activatable independently of other drives and that the drive is controllable by software.

5. Separating unit according to claim 3 or 4, **characterised in that** a programmable controller with at least one modularly laid-out intelligent subunit is used to control the separating unit, wherein the subunit is used to control and monitor time-critical processes.

## Revendications

1. Procédé de séparation de vitres défectueuses et de vitres sans défaut d'une succession de vitres (14 à 19) dans une installation de séparation comprenant un dispositif (20) de séparation, les vitres (14 à 19) étant envoyées au dispositif (20) de séparation à une vitesse ($v_2$) de transport et en vue de séparer d'une manière impeccable une vitre défectueuse déterminée de la succession de vitres (14 à 19), une distance ($d_{min}$) minimum de la vitre défectueuse déterminée à la vitre précédente et/ou à la vitre suivante étant nécessaire en amont du dispositif (20) de séparation, caractérisé en ce que pour optimiser la distance pour une séparation sans incident de la vitre (14) défectueuse déterminée, celle-ci est transportée en amont du dispositif (20) de séparation avec un profil (V1, V2, V3) de vitesse spécifique pour la vitre (14) déterminée défectueuse, la vitre (14) déterminée défectueuse étant transportée à une vitesse ($v_3$) de correction, si la distance (d) initiale de la vitre (14) déterminée défectueuse à la vitre (15) précédente, pour une vitesse inchangée par rapport à la vitre (15) précédente, est inférieure à la distance ($d_{min}$) minimum, la vitesse ($v_3$) de correction étant inférieure ou égale à la vitesse ($v_2$) de transport multipliée par la distance (d) prescrite par un cylindre (12) croqueur et divisée par la distance ($d_{min}$) minimum.

2. Procédé de séparation suivant la revendication 1, caractérisé

- en ce que les vitres (14 à 19) de l'installation de séparation sont amenées à une vitesse ($v_1$) d'entrée,
- la distance (d) prescrite par le cylindre croqueur dépendant de la vitesse ($v_1$) d'entrée et de la vitesse ($v_2$) de transport.

3. Installation de séparation de vitres pour la mise en oeuvre du procédé suivant l'une des revendications 1 ou 2, comprenant un dispositif (20) de séparation auquel peut être amenée par des champs (1 à 11) de rouleaux une succession de vitres (14 à 19) à séparer les unes des autres, caractérisée en ce qu'en amont du dispositif (20) de séparation, il est prévu au moins deux champs (1, 2) de rouleaux pouvant être commandés indépendamment l'un de l'autre ou au moins deux segments d'un champ de rouleaux (par exemple 1) pouvant être commandés indépendamment l'un de l'autre.

4. Installation de séparation suivant la revendication 3, caractérisée en ce qu'au rouleau d'un segment ou d'un champ de rouleaux est associé au moins un dispositif d'entraînement pouvant être commandé indépendamment des autres dispositifs d'entraînement et en ce que le dispositif d'entraînement peut être réglé par logiciel.

5.  Installation de séparation suivant la revendication 3 ou 4, caractérisée en ce que pour commander l'installation de séparation il est utilisé un automate programmable pouvant être programmé par mémoire et ayant une sous-unité intelligente constituée de manière modulaire, la sous-unité étant utilisée pour la commande et la surveillance d'opérations critiques dans le temps.

FIG 1

FIG 2